# EUROPÄISCHE PATENTSCHRIFT

(11) **EP 1 929 760 B1**
(45) Veröffentlichungstag und Bekanntmachung des Hinweises auf die Patenterteilung: **13.12.2017**
(21) Anmeldenummer: 06793165.9
(22) Anmeldetag: 04.09.2006
(51) Int. Cl.: H04M 7/00, H04Q 3/76, H04M 7/12, H04Q 3/00

(54) **VORRICHTUNG UND VERFAHREN ZUR TEILNEHMERNUMMER-ERKENNUNG FÜR VOICE-OVER-IP-TELEFONIE**
DEVICE AND METHOD FOR THE RECOGNITION OF CALL NUMBERS FOR VOICE-OVER-IP TELEPHONY
DISPOSITIF ET PROCÉDÉ POUR RECONNAITRE DES NUMÉROS D'ABONNÉS ET DESTINÉS À ÊTRE UTILISÉS DANS LA TÉLÉPHONIE VOIX SUR IP

(30) Priorität: 26.09.2005 DE 102005045890
(43) Veröffentlichungstag der Anmeldung: 11.06.2008
(73) Patentinhaber: Unify GmbH & Co. KG, 80807 München (DE)
(72) Erfinder: DIEBEL, Heinrich, 82064 Strasslach-Dingharting (DE)
(74) Vertreter: Fritzsche, Thomas
(86) Internationale Anmeldenummer: PCT/EP2006/065946
(87) Internationale Veröffentlichungsnummer: WO 2007/036410

(56) Entgegenhaltungen:
- EP-A- 0 957 647
- US-B1- 6 760 431
- ANONYMOUS: "Dial Peer Configuration for Cisco Voice Gateway Routers" [Online] 2003, CISCO SYSTEMS INC. , SAN JOSE, USA , XP002407633 Gefunden im Internet: URL:www.cisco.com/univercd/cc/td/doc/produ ct/software/ios123/123cgcr/vvfax_c/inct_c/ dpeer_c/dialpeer.pdf> [gefunden am 2006-11-03] Seite 9 - Seite 11 Seite 17, Zeile 10 - Zeile 17 Seite 34, Zeile 1 - Seite 36, Zeile 28 Seite 39, Zeile 1 - Zeile 5

## Beschreibung

Die vorliegende Erfindung bezieht sich auf eine Vorrichtung und ein Verfahren zur Teilnehmernummer-Erkennung für Voice-over-IP-Telefonie und insbesondere auf eine Vorrichtung und ein Verfahren zur Realisierung eines beschleunigten Verbindungsaufbaus von einem leitungsvermittelnden Netz in ein paketvermittelndes Netz.

Bei der so genannten "Voice-over-IP-Telefonie" werden Nebenstellenanlagen oder andere technische Einrichtungen, wie z.B. private oder öffentliche Vermittlungsstellen durch spezielle Gateways über das Internet oder ein Intranet derart gekoppelt, dass von einem herkömmlichen (leitungsvermitteltes) Telefon bzw. Telekommunikationsendgerät zu einem anderen herkömmlichen Telefon oder einem IP-Telefon (paketvermitteltes Endgerät) unter Nutzung der "normalen" Rufnummern bzw. Teilnehmernummern telefoniert werden kann.

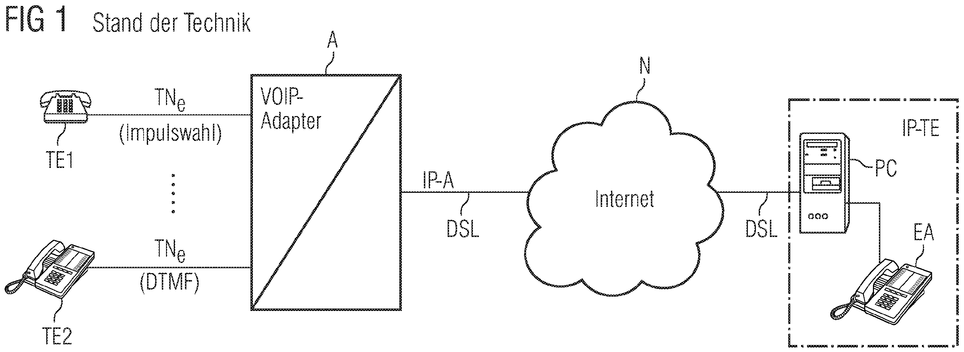

Figur 1 zeigt ein vereinfachtes Blockschaltbild eines Telekommunikationssystems zur Realisierung einer derartigen "Voice-over-IP-Telefonie" gemäß dem Stand der Technik, wobei beispielsweise herkömmliche Telekommunikationsendgeräte TE1 und TE2 in ein leitungsvermittelndes Netz, wie beispielsweise ein herkömmliches Netzwerk mit einer öffentlichen Vermittlungsstelle (PSTN, Public Switched Telephone Network) oder einer privaten Vermittlungsstelle eingebunden sind.

In US 6,760,431 B1 ist ein Telefon mit einer Schnellwahlliste für häufig verwendete Telefonnummern beschrieben. Das Telefon weist ein Protokoll auf, in das jede gewählte Telefonnummer eingetragen wird. Sobald eine vorbestimmte Verwendungshäufigkeit für eine im Protokoll eingetragene Telefonnummer erreicht ist, wird der Verwender des Telefons aufgefordert, diese Telefonnummer in die Schnellwahlliste aufzunehmen.

Zur Realisierung einer Signalisierungs-Anpassung wird gemäß Figur 1 ein Signalisierungs-Adapter A vorgesehen, der eine beispielsweise durch Impulswahl oder Tonwahl (DTMF, Dual Tone Multiple Frequency) erzeugte Teilnehmernummer TNe in eine IP-Adresse IP-A umwandelt. Mit einer derartigen IP-Adresse kann nachfolgend ein Verbindungsaufbau bzw. eine Signalisierung in einem paketvermittelnden Netz N, wie beispielsweise dem Internet oder einem Intranet, bis zu einem IP-Endgerät IP-TE durchgeführt werden, welches beispielsweise einen Personalcomputer PC und eine daran angeschlossene Ein/Ausgabeeinheit EA aufweist. Eine Anbindung des IP-Telekommunikationsendgerätes IP-TE sowie des Signalisierungs-Adapters A an das paketvermittelnde Netzwerk N erfolgt beispielsweise über eine DSL-Leitung (Digital Subscriber Line).

Bei derartigen über Internet-Protokolle (z.B. SIP, Session Initiated Protocol) weiterverbindenden Adaptern, wie sie beispielsweise in Vermittlungsanlagen oder Nebenstellenanlagen realisiert sind, muss eine von einem angeschlossenen Telekommunikationsendgerät TE1 oder TE2 gewählte Rufnummer bzw. Teilnehmernummer TNe vor dem Beginn des internetseitigen Protokollaufbaus vollständig bekannt sein, da die Interpretation nicht ziffernweise von der Vermittlungsanlage selbst oder von übergeordneten Vermittlungsanlagen wie im herkömmlichen leitungsvermittelnden Netzwerk erfolgt. Das heißt, die Vermittlungsanlage selbst hat kein Kriterium, an dem sie eine letzte Ziffer einer gewählten Ziffernfolge für eine Teilnehmernummer TNe von einem angeschlossenen Telekommunikationsendgerät TE1 oder TE2 erkennt. Dies gilt sowohl für eine Impulswahl, bei der die Ziffern durch eine Vielzahl von Impulsen erzeugt werden, als auch für eine Tonwahl (DTMF, Dual Tone Multiple Frequency), bei der für jede Ziffer eine vorbestimmte Frequenz erzeugt und übertragen wird.

Gemäß dem Stand der Technik wurde daher im Signalisierungs-Adapter A bzw. in einer entsprechenden Vermittlungsanlage ein Rufnummern- oder Teilnehmernummernende erst dann angenommen, wenn über eine vorbestimmte Zeitdauer keine weitere Ziffer mehr vom Telekommunikationsendgerät TE1 oder TE2 gesendet wird. Üblicherweise werden hierbei Zeitspannen von mindestens fünf Sekunden verwendet, um auch bei von Hand gewählten Teilnehmernummern das Ende nicht vorzeitig zu erkennen. Genauer gesagt bedeutet dies, dass die Vermittlungsanlage bzw. ein jeweiliger Signalisierungs-Adapter A selbst kein Kriterium aufweist, an dem die letzte Ziffer einer gewählten Teilnehmernummer TNe von einem angeschlossenen Telekommunikationsendgerät erkannt werden kann.

Alternativ besteht nach dem Stand der Technik auch die Möglichkeit, die am Telekommunikationsendgerät TE1 oder TE2 gewählte Teilnehmernummer durch Betätigen einer Sondertaste bzw. eines Sonderzeichens, wie z.B. "#", nach der letzten gewählten Ziffer zu ergänzen, um dem Signalisierungs-Adapter A bzw. der Vermittlungsanlage das Ende einer Teilnehmernummer eindeutig mitzuteilen und die vorstehend beschriebene Wartezeit zu vermeiden.

Der Erfindung liegt daher die Aufgabe zugrunde, eine Vorrichtung und ein Verfahren zur Teilnehmernummer-Erkennung für Voice-over-IP-Telefonie zu schaffen, bei der sowohl eine Wartezeit für den Verbindungsaufbau verringert als auch ein Bedienkomfort für den Benutzer verbessert ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 8 gelöst.

Insbesondere durch die Verwendung einer Teilnehmernummer-Speichereinheit zum Speichern einer Vielzahl von zulässigen Teilnehmernummern und einer Vergleichereinheit zum Vergleichen der gewählten Teilnehmernummer mit der Vielzahl von gespeicherten Teilnehmernummern, wobei eine Umwandlungseinheit die gewählte Teilnehmernummer in eine zugehörige IP-Adresse umwandelt, sobald die Vergleichereinheit eine Übereinstimmung zwischen der gewählten Teilnehmernummer und einer der gespeicherten Teilnehmernummern feststellt, kann sowohl die Wartezeit für einen Verbindungsaufbau von einem leitungsvermittelnden in ein paketvermittelndes Netz wesentlich reduziert werden als auch das Benutzerverhalten an herkömmlichen Telekommunikationsendgeräten unverändert beibehalten werden kann.

Hinsichtlich des Verfahrens wird demzufolge eine gewählte Teilnehmernummer mit einer Vielzahl von zulässigen gespeicherten Teilnehmernummern verglichen und die gewählte Teilnehmernummer in eine zugehörige IP-Adresse umgewandelt, sobald die gewählte Teilnehmernummer mit einer der gespeicherten Teilnehmernummern übereinstimmt.

Vorzugsweise wird ein Ende der gewählten Ziffernfolge durch eine Ziffernfolgeende-Erkennungseinheit erkannt, wobei bei erkanntem Ende die gewählte Teilnehmernummer zusätzlich in der Teilnehmernummer-Speichereinheit abgelegt werden kann. Obwohl sich dadurch bei unbekannten Teilnehmernummern Wartezeiten ergeben können, erhält man ein lernfähiges System, welches im Laufe der Zeit die vom Benutzer hauptsächlich verwendeten Telefonnummern ohne Verzögerungen in IP-Adressen umwandelt und somit einen beschleunigten Verbindungsaufbau ermöglicht.

Hierbei können die gespeicherten Teilnehmernummern nach ihrer Verwendungs-Häufigkeit und/oder nach ihrem Speicheralter sortiert werden, wobei bei einem Speicherüberlauf die Teilnehmernummer mit der geringsten Häufigkeit und/oder dem höchsten Speicheralter gelöscht werden kann. Die Lernfähigkeit der Vorrichtung sowie des zugehörigen Verfahrens und der Bedienkomfort des Benutzers wird dadurch weiter verbessert.

Insbesondere können die gespeicherten Teilnehmernummern zumindest einen Platzhalter bzw. sogenannte "Wildcards" aufweisen, wobei beim Vergleich durch die Vergleichereinheit nur die Anzahl der Ziffern, jedoch nicht deren expliziter Wert berücksichtigt wird. Bei vorbekannten Vermittlungsstrukturen und insbesondere bei vorbekannten Nebenstellenanlagen kann somit in Kenntnis der Vorwahl für die Nebenstellenanlage und der festgelegten Anzahl von Ziffern für Rufnummern innerhalb der Nebenstellenanlage ein sofortiger Verbindungsaufbau auch bei nicht einzeln bekannten Teilnehmernummern durchgeführt werden. Ein Speicherplatzbedarf wird dadurch wesentlich verringert.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
- Figur 1: eine vereinfachte Blockdarstellung eines Telekommunikationssystems zur Realisierung einer Voice-over-IP-Telefonie gemäß dem Stand der Technik;
- Figur 2A: eine vereinfachte Blockdarstellung einer Vorrichtung zur Teilnehmernummer-Erkennung für Voice-over-IP-Telefonie gemäß der vorliegenden Erfindung;
- Figur 2B: eine vereinfachte Blockdarstellung einer Teilnehmernummer-Speichereinheit gemäß Figur 2A, wobei die gespeicherte Teilnehmernummer Platzhalter aufweist; und
- Figur 3: ein vereinfachtes Flussdiagramm zur Veranschaulichung eines Verfahrens zur Teilnehmernummer-Erkennung für Voice-over-IP-Telefonie gemäß der vorliegenden Erfindung.

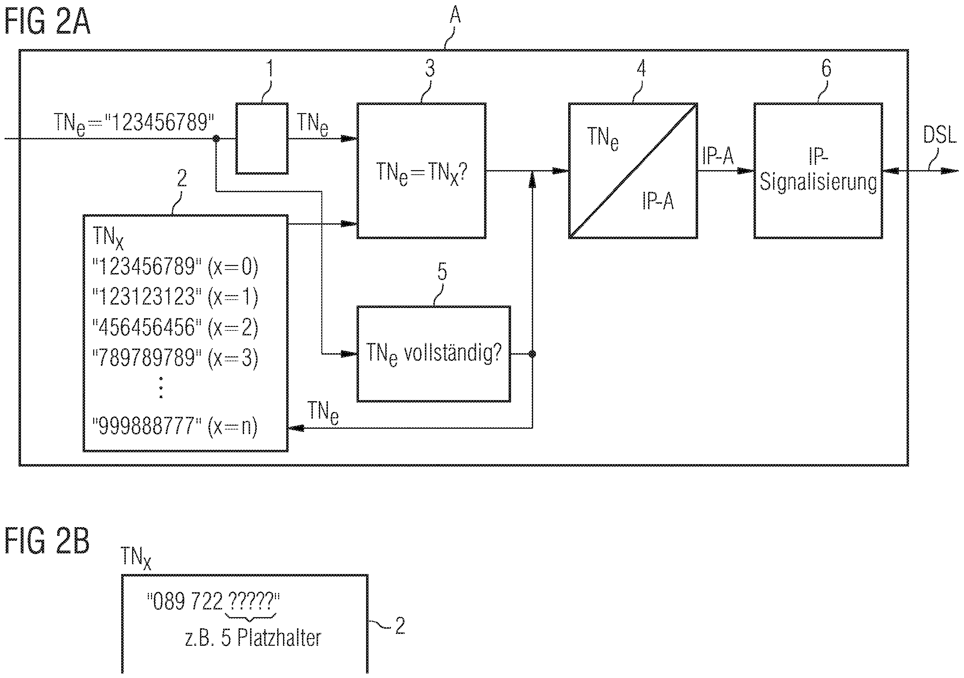

Figur 2A zeigt eine vereinfachte Blockdarstellung einer Vorrichtung zur Teilnehmernummer-Erkennung für Voice-over-IP-Telefonie und insbesondere eines erfindungsgemäßen Voice-over-IP-Adapters A zum Erkennen von gewählten Ziffern einer Teilnehmernummer TNe für einen Verbindungsaufbau von einem leitungsvermittelnden Netz in ein paketvermittelndes Netz, wie es in Figur 1 dargestellt ist.

Obwohl der erfindungsgemäße Signalisierungs-Adapter A vorzugsweise in einer Vermittlungsanlage, wie beispielsweise einer öffentlichen oder einer privaten Vermittlungsstelle und insbesondere in Nebenstellenanlagen realisiert wird, kann er auch an weiteren Stellen innerhalb eines heterogenen Telekommunikationssystems mit leitungsvermittelnden und paketvermittelnden Netzen realisiert sein.

Unter leitungsvermittelnden Netzen (Circuit Switched Networks) versteht man Netzwerke, bei denen für die gesamte Verbindungsdauer ein durchgehender Kanal (Punkt-zu-Punkt-Verbindung) geschaltet wird, auf dem die zu übermittelnden Daten vom Sender zum Empfänger gelangen. Das heißt, alle Daten nehmen den gleichen Weg und kommen immer in der gleichen Reihenfolge an, in der sie auf den Weg gebracht wurden. Demgegenüber werden in paketvermittelnden Netzen (Packed Switched Networks), wie beispielsweise dem Internet oder dem Intranet bei einer Verbindung nicht ein durchgehender, physikalischer Kanal zur Verfügung gestellt, sondern die Nachricht beim Sender selbst in kleine einzelne und unter Umständen verschieden lange Pakete aufgeteilt, welche dann mit Zusatzdaten zur Identifikation von Sender und Empfänger und einer fortlaufenden Nummerierung unabhängig voneinander durch das Netz geschickt werden. Jedes Paket wird hierbei in den Netzknoten analysiert und für jedes Paket entscheidet der Netzknoten in Abhängigkeit der aktuellen Netzlast, über welche abgehende Verbindung das Paket weiter zum Empfänger gesendet wird. In Abhängigkeit der Netzauslastung können daher Pakete unter Umständen verschiedene Wege bis zum Empfänger nehmen.

In gleicher Weise unterscheidet sich auch der Verbindungsaufbau in leitungsvermittelnden Netzen von einem Verbindungsaufbau in paketvermittelnden Netzen. Während bei leitungsvermittelnden Netzen sozusagen mit jeder gewählten Ziffer einer Teilnehmernummer ein Vermittlungsaufbau durch die Vermittlungsstellen zeitgleich durchgeführt werden kann, muss in paketvermittelnden Netzen die Zieladresse bzw. IP-Adresse des Zielorts vollständig bekannt sein, um den Verbindungsaufbau zu ermöglichen, und die jeweiligen Pakete auf den Weg zu bringen.

Gemäß Figur 2A weist daher der Voice-over-IP-Signalisierungs-Adapter A eine Ziffernfolge-Erfassungseinheit 1 auf, mit der eine von einem herkömmlichen Telekommunikationsendgerät, wie beispielsweise einem Impulswahl-Telefon oder einem DTMF-Wahl-Telekommunikationsendgerät, gewählte Ziffernfolge als gewählte Teilnehmernummer TNe erfasst und ausgewertet werden kann. Ferner wird eine Teilnehmernummer-Speichereinheit 2 vorgesehen, in der eine Vielzahl von zulässigen Teilnehmernummern TNx bereits vorab gespeichert sein können, x ist hierbei ein laufender Parameter für eine natürliche Zahl von 0 bis n.

Ferner ist gemäß Figur 2A eine Vergleichereinheit 3 zum Vergleichen der gewählten und bereits von der Ziffernfolge-Erfassungseinheit 1 (ganz oder teilweise) erfassten Teilnehmernummer TNe mit der Vielzahl von gespeicherten Teilnehmernummern TNx vorgesehen. Genauer gesagt wird gemäß Figur 2A von einem nicht dargestellten Telekommunikationsendgerät beispielsweise mittels Impulswahl oder Tonwahl eine Ziffernfolge an die Ziffernfolge-Erfassungseinheit 1 ausgegeben, welche jeweils eine für einen bestimmten Zeitpunkt vollständig oder nur teilweise erfasste Teilnehmernummer TNe an die Vergleichereinheit 3 ausgibt.

Diese ausgegebene Teilnehmernummer TNe kann somit auch eine noch nicht vollständige Teilnehmernummer sein, da beispielsweise ein Wählvorgang noch nicht vollständig abgeschlossen ist. Diese (zumeist teilfertigen) Teilnehmernummern TNe werden nunmehr kontinuierlich mit der in der Speichereinheit 2 abgelegten Vielzahl von zulässigen Teilnehmernummern TNx auf Übereinstimmung verglichen, wobei erst bei vorhandener Übereinstimmung zwischen der gewählten und von der Erfassungseinheit 1 ausgegebenen Teilnehmernummer TNe mit einer gespeicherten Teilnehmernummer TNx die erfasste Teilnehmernummer TNe an eine Umwandlungseinheit 4 zum augenblicklichen Umwandeln in eine zugehörige IP-Adresse IP-A zugeführt wird. Diese IP-Adresse IP-A wird anschließend von einer IP-Signalisierungseinheit (6) weitergeleitet, welche auf der Grundlage dieser IP-Adresse eine Signalisierung bzw. einen Verbindungsaufbau in dem paketvermittelnden Netz durchführt, welches beispielsweise über eine DSL-Leitung DSL angeschlossen ist.

Obwohl die Teilnehmerdaten für die Umwandlungseinheit 4 grundsätzlich auch im Signalisierungs-Adapter A lokal abgelegt sein können, werden sie üblicherweise von einem im paketvermittelnden Netz befindlichen Server bezogen.

Auf diese Weise ergeben sich für bereits vorbekannte und gespeicherte Teilnehmernummern TNx keinerlei Verzögerungs- bzw. Wartezeiten bei einem Verbindungsaufbau von einem leitungsvermittelnden Netz in ein paketvermittelndes Netz. Darüber hinaus ergeben sich keine Umstellungen im Bedienkomfort des Benutzers, da die herkömmlichen Telekommunikationsendgeräte im leitungsvermittelnden Netz wie üblich gehandhabt werden können. Insbesondere ist die Eingabe von Sonderzeichen zur Festlegung eines Rufnummern- bzw. Teilnehmernummernendes nicht notwendig.

Zur Realisierung eines Lernvorgangs bzw. eines sich selbst optimierenden Systems kann der Signalisierungs-Adapter A gemäß Figur 2A ferner eine Ziffernfolgeende-Erkennungseinheit 5 zum Erkennen eines Endes der vom Telekommunikationsendgerät gewählten Ziffernfolge aufweisen, wobei bei erkanntem Ende die gewählte Teilnehmernummer TNe in der Teilnehmernummer-Speichereinheit 2 als zusätzliche nunmehr zulässige Teilnehmernummer TNx abgelegt bzw. gespeichert wird. Die Ziffernfolgeende-Erkennungseinheit 5 kann hierbei wie beim Stand der Technik entweder das Ende der Ziffernfolge an Hand eines vorbestimmten Sonderzeichens bzw. einer Sondertaste, wie beispielsweise "#" oder an Hand einer überschrittenen vorbestimmten Zeitdauer erkannt werden, in der nach einer gewählten Ziffer keine nachfolgende Ziffer erfasst wird. Diese Wartezeit bzw. vorbestimmte Zeitdauer kann beispielsweise auf größer fünf Sekunden eingestellt werden, um auch bei von Hand gewählten Rufnummern das Ende nicht vorzeitig zu erkennen. Obwohl auf diese Weise zwar für erstmalig und noch nicht in der Teilnehmernummer-Speichereinheit 2 abgelegte Rufnummern wiederum Wartezeiten in Kauf genommen werden oder sich ein Bedienkomfort aufgrund der Verwendung von Sondertasten bzw. Sonderzeichen erschwert, erhält man dadurch ein lernfähiges System, da bereits bei der zweiten Wahl der gleichen Teilnehmernummer die Vergleichereinheit 3 die nunmehr abgespeicherte Teilnehmernummer TNx erkennt und sofort die verzögerungsfreie Umwandlung der gewählten Teilnehmernummer in eine zugehörige IP-Adresse IP-A veranlasst, und somit eine verzögerungsfreie IP-Signalisierung bzw. ein Verbindungsaufbau im paketvermittelnden Netz durchgeführt werden kann.

Zur Vermeidung eines Speicherüberlaufs bei einem derartigen lernfähigen System, bei dem jeweils eine vollständig erkannte neue Teilnehmernummer TNe als zulässige Teilnehmernummer TNx in der Teilnehmernummer-Speichereinheit 2 gespeichert wird, kann ferner eine Sortierung nach verschiedenen Kriterien durchgeführt werden. Vorzugsweise werden die in der Teilnehmernummer-Speichereinheit 2 gespeicherten zulässigen Teilnehmernummern TNx nach ihrer Wahl-Häufigkeit sortiert und bei einem Speicherüberlauf bzw. im Falle eines nicht ausreichenden Speicherplatzes für eine neue einzuschreibende Teilnehmernummer TNx die Teilnehmernummer mit der geringsten Häufigkeit gelöscht. Auf diese Weise kann der Lernvorgang an die Benutzergewohnheiten insbesondere bei einer Nebenstellenanlage optimiert werden.

Darüber hinaus können die in der Teilnehmernummer-Speichereinheit 2 gespeicherten zulässigen Teilnehmernummern TNx nach ihrem Speicherzeitpunkt bzw. ihrem Speicheralter sortiert und bei einem Speicherüberlauf bzw. einem nicht ausreichenden Speicherplatz die ältesten, d.h. die zu einem frühesten Zeitpunkt eingetragenen Teilnehmernummern TNx gelöscht werden. Hierdurch ergibt sich ebenfalls eine wesentliche Verbesserung der Benutzerfreundlichkeit.

Gemäß Figur 2B können in der Teilnehmernummer-Speichereinheit 2 neben der Vielzahl von tatsächlich existierenden Teilnehmernummern auch nicht existierende aber zulässige Platzhalter-Teilnehmernummern TNx vorliegen, die zumindest einen Platzhalter "?" als jeweilige Ziffer besitzen. Gemäß Figur 2B besitzt demzufolge eine derartige Platzhalter-Teilnehmernummer eine für eine Nebenstellenanlage tatsächlich existierende Vorwahl z.B. "089722" mit nachfolgenden fünf Platzhaltern "?????", die beliebige Ziffernkombinationen bei einem Vergleich in der Vergleichereinheit 3 als zulässig bewerten. Demzufolge wird für die Platzhalter "?" nicht der tatsächliche Ziffernwert bzw. Inhalt verglichen, sondern lediglich eine Anzahl der den Platzhaltern entsprechenden gewählten Ziffern mit der Anzahl der Platzhalter in der Platzhalter-Teilnehmernummer auf Übereinstimmung geprüft. Auf diese Weise kann für vorbekannte Telekommunikationssysteme und insbesondere vorbekannte private Vermittlungsanlagen mit nur einer Platzhalter-Teilnehmernummer eine Vielzahl von tatsächlich existierenden Teilnehmernummern abgedeckt werden. Ein Speicherplatzbedarf wird hierdurch wesentlich verringert, wobei weiterhin eine Wartezeit verkürzt ist und ein Bedienkomfort am herkömmlichen Telekommunikationsendgerät unverändert bleibt.

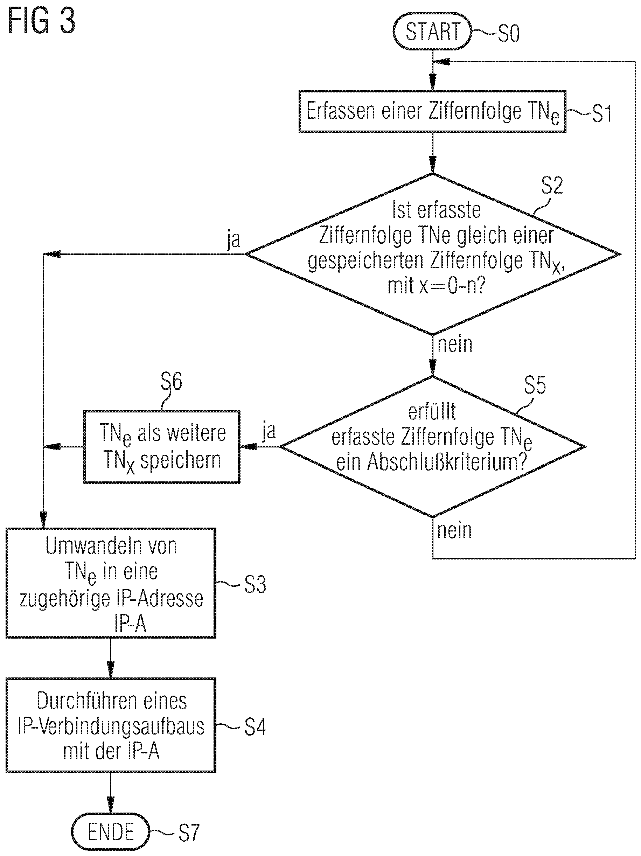

Figur 3 zeigt eine vereinfachte Darstellung eines Flussdiagramms zur Veranschaulichung eines Verfahrens zum Erkennen von gewählten Ziffern einer Teilnehmernummer für einen Verbindungsaufbau von einem leitungsvermittelnden Netz zu einem paketvermittelnden Netz wie es von der vorstehend beschriebenen Vorrichtung durchgeführt werden kann.

Nach einem Start im Schritt S0 wird in einem Schritt S1 zunächst eine Ziffernfolge TNe einer gewählten Rufnummer bzw. Teilnehmernummer erfasst. Hierbei kann es sich um eine Impulswahl-Ziffernfolge oder um eine Tonwahl-Ziffernfolge in einem herkömmlichen leitungsvermittelnden Netz handeln.

In einem Schritt S2 wird gemäß Figur 3 ein Vergleich der gewählten und bereits erfassten Teilnehmernummer TNe mit einer Vielzahl von zulässigen und bereits gespeicherten Teilnehmernummern TNx durchgeführt, wobei der Zählwert x von 0 bis n wiederholt hochgezählt wird und bei Erreichen der maximalen Anzahl von bereits abgespeicherten Teilnehmernummern TNx der Zählwert wieder auf 0 zurückgesetzt wird. Auf diese Weise können die zu einem vorbestimmten Zeitpunkt bereits erfassten Ziffernfolgen bzw. gewählten Teilnehmernummern jeweils mit allen bereits vorhandenen und gespeicherten Teilnehmernummern TNx verglichen werden.

Sobald die erfasste und gewählte Teilnehmernummer TNe mit einer der gespeicherten Teilnehmernummern TNx übereinstimmt, wird zu einem Schritt S3 weiterverzweigt, bei dem eine Umwandlung der gewählten und erfassten Teilnehmernummer TNe in eine zugehörige IP-Adresse stattfindet. Diese Umwandlung geschieht z.B. an Hand herkömmlicher Routing-Tabellen, wie beim Stand der Technik, weshalb auf eine detaillierte Beschreibung nachfolgend verzichtet wird.

Anschließend kann in einem Schritt S4 auf der Grundlage dieser IP-Adresse eine Signalisierung bzw. ein Verbindungsaufbau im paketvermittelnden Netz durchgeführt werden. Das Verfahren endet anschließend im Schritt S7.

So lange jedoch im Schritt S2 keine Übereinstimmung zwischen der erfassten Teilnehmernummer TNe und einer der gespeicherten Teilnehmernummern TNx festgestellt werden kann, kann ferner der Schritt S5 durchgeführt werden, bei dem eine Ende-Erkennung der gewählten Ziffernfolge möglich ist. Erfüllt demzufolge im Schritt S5 die erfasste Ziffernfolge bzw. Teilnehmernummer TNe ein vorbestimmtes Abschluss- bzw. Endekriterium, so wird zu einem Schritt S6 verzweigt, bei dem die erfasste Teilnehmernummer TNe als weitere zulässige Teilnehmernummer TNx in der Teilnehmernummer-Speichereinheit 2 gespeichert wird. Als Abschlusskriterium im Schritt S5 können wiederum die bereits beschriebenen Wartezeiten nach einer zuletzt empfangenen Ziffer oder vorbestimmte Sonderzeichen bzw. Sondertasten ausgewertet werden.

Anschließend wird wiederum zum Schritt S3 und Schritt S4 weiterverzweigt, bei dem unter Verwendung dieser zusätzlich erfassten Teilnehmernummer TNe eine zugehörige IP-Adresse IP-A ermittelt und ein entsprechender IP-Verbindungsaufbau im paketvermittelnden Netz durchgeführt wird.

So lange weder der Vergleich im Schritt S2 eine positive Übereinstimmung festgestellt hat, noch im Schritt S5 ein Abschlusskriterium der erfassten Ziffernfolge erfüllt ist, wird weiterhin zum Schritt S1 zurückverzweigt und es werden weiterhin die eingehenden Ziffernfolgen von den herkömmlichen Telekommunikationsendgeräten erfasst.

Zur Optimierung einer Lernfähigkeit können die gespeicherten Teilnehmernummern TNx nach ihrer Aufruf-Häufigkeit sortiert und bei einem drohenden Speicherüberlauf die Teilnehmernummer mit geringster Häufigkeit gelöscht werden. In gleicher Weise können die gespeicherten Teilnehmernummern TNx zusätzlich oder alternativ nach ihrem Speicheralter sortiert werden und bei einem drohenden Speicherüberlauf die älteste Teilnehmernummer aus der Speichereinheit 2 gelöscht werden. Ferner können die gespeicherten zulässigen Teilnehmernummern auch sogenannte Platzhalter-Teilnehmernummern aufweisen, welche zumindest einen Platzhalter als Ziffer besitzen, der beim Vergleich im Schritt S2 nur für eine Anzahl der gewählten Ziffern verwendet wird und hinsichtlich seines Ziffernwertes bzw. -inhalts unberücksichtigt bleibt.

Auf diese Weise kann eine Wartezeit des Benutzers für einen Verbindungsaufbau von einem leitungsvermittelnden Netz in ein paketvermittelndes Netz wesentlich verkürzt werden, wobei sich diese Vereinfachung insbesondere für die am häufigsten gewählten Rufnummern ohne zusätzliche Benutzeraktionen automatisch ergibt. Der dem Benutzer bekannte Bedienkomfort am Telekommunikationsendgerät bleibt bei Umstellung von leitungsvermittelter auf paketvermittelt Telefonie erhalten, weshalb keine Akzeptanzprobleme auftreten. Ferner müssen in einem jeweiligen Telekommunikationsendgerät bereits gespeicherte Rufnummern in sogenannten Telefonbüchern nicht durch weitere Sonderzeichen ergänzt werden, um einen schnelleren Verbindungsaufbau zu ermöglichen. In gleicher Weise müssen bei einer Synchronisation mit der Rufnummer in dem Endgerät mit Telekommunikationsendgeräten anderer Netze, wie z.B. Mobilfunknetze, die dort eventuell störenden Sonderzeichen nicht entfernt werden. Ferner wird im herkömmlichen Telekommunikationsendgerät kein zusätzlicher Speicherplatz pro Telefonbucheintrag für ein rufnummernabschließendes Sonderzeichen verbraucht.

Die vorliegende Erfindung wurde vorstehend anhand einer IP-Telefonie von einem leitungsvermittelnden in ein paketvermittelndes Netz beschrieben. Sie ist jedoch nicht darauf beschränkt und umfasst in gleicher Weise auch weitere Sprach- oder Datenverbindungen von beispielsweise einem leitungsvermittelnden Netz in ein paketvermittelndes Netz und wiederum zurück in ein leitungsvermittelndes Netz.

### Bezugszeichenliste

- 1: Ziffernfolge-Erfassungseinheit
- 2: Teilnehmernummer-Speichereinheit
- 3: Vergleichereinheit
- 4: Umwandlungseinheit
- 5: Ziffernfolgeende-Erkennungseinheit
- 6: IP-Signalisierungseinheit
- TE1, TE2: leitungsvermitteltes Telekommunikationsendgerät
- A: Signalisierungs-Adapter
- N: paketvermittelndes Netz
- IP-TE: paketvermitteltes Telekommunikationsendgerät
- PC: Personalcomputer
- EA: Ein/Ausgabeeinheit
- TNe: gewählte Teilnehmernummer
- TNx: gespeicherte Teilnehmernummer
- DSL: DSL-Leitung
- ?: Platzhalter
- S0-S7: Verfahrensschritte

## Patentansprüche

1. Vorrichtung zum Erkennen von gewählten Ziffern einer Teilnehmernummer für einen Verbindungsaufbau von einem leitungsvermittelnden Netz in ein paketvermittelndes Netz mit
a) einer Ziffernfolge-Erfassungseinheit (1) zum Erfassen einer gewählten Ziffernfolge als gewählte Teilnehmernummer (TNe);
b) einer Teilnehmernummer-Speichereinheit (2) zum Speichern einer Vielzahl von zulässigen Teilnehmernummern (TNx);
c) einer Ziffernfolgeende-Erkennungseinheit (5) zum Erkennen eines Endes der gewählten Ziffernfolge derart, dass bei einem erkannten Ende die als vollständig erkannte gewählte Teilnehmernummer (TNe) als weitere nunmehr zulässige Teilnehmernummer (TNx) in der Teilnehmernummer-Speichereinheit (2) gespeichert wird;
d) einer Vergleichereinheit (3) zum kontinuierlichen Vergleichen der auch noch nicht vollständig gewählten Teilnehmernummer (TNe) mit der Vielzahl von zulässigen gespeicherten Teilnehmernummern (TNx); und
e) einer Umwandlungseinheit (4) zum augenblicklichen Umwandeln der gewählten Teilnehmernummer (TNe) in eine zugehörige IP-Adresse (IP-A), sobald die Vergleichereinheit (3) eine Übereinstimmung der gewählten und von der Ziffernfolge-Erfassungseinheit ausgegebenen Teilnehmernummer (TNe) mit einer der gespeicherten Teilnehmernummern (TNx) feststellt.

2. Vorrichtung nach Patentanspruch 1, **dadurch gekennzeichnet, dass** die Ziffernfolgeende-Erkennungseinheit (5) dazu eingerichtet ist, das Ende der Ziffernfolge anhand eines vorbestimmten Sonderzeichens oder einer überschrittenen vorbestimmten Zeitdauer nach einer gewählten Ziffer zu erkennen.

3. Vorrichtung nach einem der Patentansprüche 1 und 2, **dadurch gekennzeichnet, dass** die Teilnehmernummer-Speichereinheit (2) dazu eingerichtet ist, die gespeicherten Teilnehmernummern (TNx) nach ihrer Häufigkeit zu sortieren und bei einem Speicherüberlauf die Teilnehmernummer (TNx) mit geringster Häufigkeit zu löschen.

4. Vorrichtung nach einem der Patentansprüche 1 bis 3, **dadurch gekennzeichnet, dass** die Teilnehmernummer-Speichereinheit (2) dazu eingerichtet ist, die gespeicherten Teilnehmernummern (TNx) nach ihrem Speicheralter zu sortieren und bei einem Speicherüberlauf die älteste Teilnehmernummer (TNx) zu löschen.

5. Vorrichtung nach einem der Patentansprüche 1 bis 4, **dadurch gekennzeichnet, dass** die gespeicherten Teilnehmernummern (TNx) zumindest einen Platzhalter (?) aufweisen, der beim Vergleich durch die Vergleichereinheit (3) nur für die Anzahl der Ziffern verwendbar ist.

6. Vorrichtung nach einem der Patentansprüche 1 bis 5, **gekennzeichnet durch** eine IP-Signalisierungseinheit (6), die dazu eingerichtet ist, auf der Grundlage der IP-Adresse (IP-A) eine Signalisierung in dem paketvermittelnden Netz (N) durchzuführen.

7. Verfahren zum Erkennen von gewählten Ziffern einer Teilnehmernummer für einen Verbindungsaufbau von einem leitungsvermittelnden Netz in ein paketvermittelndes Netz mit den Schritten:
a) Erfassen einer gewählten Ziffernfolge als gewählte Teilnehmernummer (S1) durch eine Ziffernfolge-Erfassungseinheit (1);
b) Speichern einer Vielzahl von zulässigen Teilnehmernummern (TNx) in einer Teilnehmernummer-Speichereinheit (2);
c) Erkennen eines Endes der gewählten Ziffernfolge (S5) durch eine Ziffernfolgeende-Erkennungseinheit (5) derart, dass die als vollständig erkannte gewählte Teilnehmernummer als weitere nunmehr zulässige Teilnehmernummer gespeichert wird (S6), wenn ein Ende erkannt wurde, oder Verzweigen zu Schritt a), wenn kein Ende erkannt wurde;
d) kontinuierliches Vergleichen der auch noch nicht vollständig gewählten Teilnehmernummer mit der Vielzahl von zulässigen gespeicherten Teilnehmernummern (S2) durch eine Vergleichereinheit (3); und
e) augenblickliches Umwandeln: der gewählten Teilnehmernummern in eine zugehörige IP-Adresse durch eine Umwandlungseinheit (4), sobald die gewählte und von der Ziffernfolge-Erfassungseinheit ausgegebene Teilnehmernummer mit einer der gespeicherten Teilnehmernummern übereinstimmt (S3).

8. Verfahren nach Patentanspruch 7, **gekennzeichnet durch** den weiteren Schritt:
d) Durchführen einer Signalisierung im paketvermittelnden Netz auf der Grundlage der IP-Adresse (S4).

9. Verfahren nach einem der Patentansprüche 7 und 8, **dadurch gekennzeichnet, dass** das Ende der Ziffernfolge an Hand eines vorbestimmten Sonderzeichens öder einer überschrittenen vorbestimmten Zeitdauer nach einer gewählten Ziffer erkannt wird.

10. Verfahren nach einem der Patentansprüche 7 bis 9, **dadurch gekennzeichnet, dass** die gespeicherten Teilnehmernummern nach ihrer Häufigkeit sortiert und bei einem Speicherüberlauf die Teilnehmernummern mit geringster Häufigkeit gelöscht werden.

11. Verfahren nach einem der Patentansprüche 7 bis 10, **dadurch gekennzeichnet, dass** die gespeicherten Teilnehmernummern nach ihrem Speicheralter sortiert und bei einem Speicherüberlauf die älteste Teilnehmernummer gelöscht wird.

12. Verfahren nach einem der Patentansprüche 7 bis 11, **dadurch gekennzeichnet, dass** die gespeicherten Teilnehmernummern zumindest einen Platzhalter aufweisen, der beim Vergleichen der gewählten Teilnehmernummer mit der Vielzahl von zulässigen gespeicherten Teilnehmernummern nur für eine Anzahl der Ziffern verwendet wird.

## Claims

1. A device for the recognition of dialed digits of a call number for establishing a connection from a circuit-switched network to a packet-switched network, comprising
a) a string-detection unit (1) for detecting a dialed string of digits as a dialed call number (TNe);
b) a call-number storage unit (2) for storing a plurality of authorized call numbers (TNx);
c) a string-end detection unit (5) for detecting an end of the dialed string of digits such that a dialed call number (TNe), which has been recognized to be complete based on the detection of the end of the string, is stored as an additional, now-authorized call number (TNx) in the call-number storage unit (2);
d) a comparator unit (3) for continuously comparing even incompletely dialed call numbers (TNe) with the plurality of authorized, stored call numbers (TNx); and
e) a conversion unit (4) for instantly converting the dialed call number (TNe) into an associated IP-address (IP-A) as soon as the comparator unit (3) detects that the dialed call number (TNe) output by the string-detection unit matches one of the stored call numbers (TNx) .

2. The device according to Claim 1, **characterized in that** the string-end detection unit (5) is configured to detect the end of the string of digits on the basis of a predetermined special character or by a predetermined period of time having been exceeded after a digit was dialed.

3. The device according to Claim 1 or 2, **characterized in that** the call-number storage unit (2) is configured to sort the stored call numbers (TNx) according to the frequency of their occurrence and to delete the call number (TNx) with the least frequent occurrence in case of storage overflow.

4. The device according to any one of Claims 1 to 3, **characterized in that** the call-number storage unit (2) is configured to sort the stored call numbers (TNx) according to the time at which they were stored and to delete the oldest call number (TNx) in case of storage overflow.

5. The device according to any one of Claims 1 to 4, **characterized in that** the stored call numbers (TNx) comprise at least one placeholder (?), which is useable only for the detection of the number of digits during the comparison performed by the comparator unit (3).

6. The device according to any one of Claims 1 to 5, **characterized in that** it comprises an IP-signaling unit (6), which is configured to perform a signaling process within the packet-switched network (N) on the basis of the IP-address (IP-A).

7. A method for the recognition of dialed digits of a call number for establishing a connection from a circuit-switched network to a packet-switched network, comprising the following steps:
a) detection of a dialed string of digits as a dialed call number (S1) by a string-detection unit (1);
b) storage of a plurality of authorized call numbers (TNx) in a call-number storage unit (2);
c) detection of an end of the dialed string of digits (S5) by a string-end detection unit (5), such that a dialed call number that has been recognized to be complete is stored as an additional, now-authorized call number (S6) if an end is detected, or return to step a) if no end is detected;
d) continuous comparison of even an incompletely dialed call number with the plurality of authorized stored call numbers (S2) by a comparator unit (3); and
e) instantaneous conversion of the dialed call numbers into an associated IP-address by a converter unit (4), as soon as the dialed call number output by the digit-detection unit matches one of the stored call numbers (S3).

8. The method according to Claim 7, **characterized by** comprising the additional step:
d) performance of a signaling process within the packet-switched network on the basis of the IP-address (S4).

9. The method according to Claim 7 or 8, **characterized in that** the end of the string of digits is detected on the basis of a predetermined special character or by a predetermined period of time having been exceeded after a digit was dialed.

10. The method according to any one of Claims 7 to 9, **characterized in that** the stored call numbers are sorted according to the frequency of their occurrence and that the call numbers with the least frequent occurrence are deleted in case of storage overflow.

11. The method according to any one of Claims 7 to 10, **characterized in that** the stored call numbers are sorted according to the time at which they were stored and that the oldest call number is deleted in case of storage overflow.

12. The method according to any one of Claims 7 to 11, **characterized in that** the stored call numbers comprise at least one placeholder, which is used only for the detection of the number of digits during the comparison of the dialed call number with the plurality of authorized stored call numbers.

## Revendications

1. Dispositif pour reconnaître des chiffres composés d'un numéro d'abonné destiné à être utilisé pour la mise en connexion d'un réseau à commutation de circuits dans un réseau de transmission par paquets comportant
a) une unité de détection de séquence de chiffres (1) pour détecter une séquence de chiffres composés comme numéro d'abonné composé (TNe) ;
b) une unité de stockage de numéros d'abonné (2) pour stocker une multitude de numéros d'abonné autorisés (TNx) ;
c) une unité de reconnaissance de la fin de séquence de chiffres (5) pour reconnaître une fin de la séquence de chiffres composés de telle sorte que le numéro d'abonné composé reconnu comme étant complet (TNe) est stocké, en cas de fin reconnue, comme autre numéro d'abonné (TNx) dès lors autorisé dans l'unité de stockage de numéros d'abonné (2) ;
d) une unité de comparaison (3) pour comparer en continu les numéros d'abonné (TNe) pas encore complètement composés à la multitude de numéros d'abonné autorisés stockés (TNx) ; et
e) une unité de conversion (4) pour convertir immédiatement le numéro d'abonné composé (TNe) en adresse IP associée (IP-A) dès que l'unité de comparaison (3) constate une conformité du numéro d'abonné (TNe) composé et émis par l'unité de détection de séquence de chiffres avec l'un des numéros d'abonné (TNx) stockés.

2. Dispositif selon la revendication 1, **caractérisé en ce que** l'unité de reconnaissance de la fin de séquence de chiffres (5) a été conçue pour reconnaître la fin de la séquence de chiffres à l'aide d'un caractère spécial prédéterminé ou d'une durée déterminée dépassée selon un chiffre composé.

3. Dispositif selon l'une quelconque des revendications 1 et 2, **caractérisé en ce que** l'unité de stockage de numéros d'abonné (2) a été conçue pour trier les numéros d'abonné stockés (TNx) selon leur fréquence et de supprimer le numéro d'abonné (TNx) ayant la plus faible fréquence en cas de débordement de mémoire.

4. Dispositif selon l'une quelconque des revendications 1 à 3, **caractérisé en ce que** l'unité de stockage de numéros d'abonné (2) a été conçue pour trier les numéros d'abonné (TNx) selon leur durée de stockage et pour supprimer le numéro d'abonné (TNx) le plus ancien en cas de débordement de mémoire.

5. Dispositif selon l'une quelconque des revendications 1 à 4, **caractérisé en ce que** les numéros d'abonné stockés (TNx) comportent au moins un joker (?) qui en cas de comparaison par l'unité de comparaison (3) n'est utilisable que pour un certain nombre de chiffres.

6. Dispositif selon l'une quelconque des revendications 1 à 5, **caractérisé par** une unité de signalisation IP (6) qui a été conçue pour réaliser une signalisation dans le réseau de transmission par paquets (N) sur la base de l'adresse IP (IP-A) .

7. Procédé pour reconnaitre des chiffres composés d'un numéro d'abonné pour une mise en connexion d'un réseau à commutation de circuits dans un réseau de transmission par paquets comportant les étapes suivantes :
a) détection d'une séquence de chiffres comme numéro d'abonné composé (S1) par une unité de détection de séquence de chiffres (1) ;
b) stockage d'une multitude de numéros d'abonné autorisés (TNx) dans une unité de stockage de numéros d'abonné (2) ;
c) détection d'une fin de la séquence de chiffres composés (S5) par une unité de reconnaissance de fin de séquence de chiffres (5) de la sorte que le numéro d'abonné composé reconnu comme étant complet dès lors est stocké comme un autre numéro d'abonné autorisé (S6), lorsqu'une fin a été reconnue, ou renvoi à l'étape a), lorsqu'aucune fin n'a été reconnue ;
d) comparaison continue du numéro d'abonné pas encore composé complètement à la multitude des numéros d'abonné autorisés stockés (S2) par une unité de comparaison (3) ; et
e) conversion immédiate des numéros d'abonné composés en une adresse IP associée par une unité de conversion (4), dès que le numéro d'abonné composé et émis par l'unité de détection de séquence de chiffres correspond à l'un des numéros d'abonné stockés (S3).

8. Procédé selon la revendication 7, **caractérisé par** l'étape suivante :
d) réalisation d'une signalisation dans le réseau de transformation de paquets sur la base de l'adresse IP (S4).

9. Procédé selon l'une quelconque des revendications 7 et 8, **caractérisé en ce que** la fin de la séquence de chiffres est reconnue à l'aide d'un caractère spécial prédéterminé ou d'une durée prédéterminée dépassée selon un chiffre composé.

10. Procédé selon l'une quelconque des revendications 7 à 9, **caractérisé en ce que** les numéros d'abonné stockés sont triés selon leur fréquence et que les numéros d'abonné ayant la plus faible fréquence sont supprimés en cas de débordement de mémoire.

11. Procédé selon l'une quelconque des revendications 7 à 10, **caractérisé en ce que** les numéros d'abonné stockés sont triés selon leur durée de stockage et que le numéro d'abonné le plus ancien est supprimé en cas de débordement de mémoire.

12. Procédé selon l'une quelconque des revendications 7 à 11, **caractérisé en ce que** les numéros d'abonné stockés comportent au moins un joker qui n'est utilisé pour la comparaison des numéros d'abonné composé à la multitude de numéros d'abonné stockés autorisés que pour un certain nombre de chiffres.
